# EUROPÄISCHE PATENTSCHRIFT

(11) **EP 1 142 277 B1**
(45) Veröffentlichungstag und Bekanntmachung des Hinweises auf die Patenterteilung: **15.12.2004**
(21) Anmeldenummer: 00902536.2
(22) Anmeldetag: 05.01.2000
(51) Int. Cl.: H04M 3/00, H04Q 1/38, H04M 3/30, H04M 7/00

(54) **SCHALTUNGSANORDNUNG ZUR SIGNALISIERUNG IN TELEKOMMUNIKATIONSNETZEN**
CIRCUIT ARRANGEMENT FOR TRANSMITTING SIGNALS IN TELECOMMUNICATIONS NETWORKS
CIRCUIT POUR LA SIGNALISATION DANS DES RESEAUX DE TELECOMMUNICATION

(30) Priorität: 15.01.1999 DE 19901463
(43) Veröffentlichungstag der Anmeldung: 10.10.2001
(73) Patentinhaber: Infineon Technologies AG, 81669 München (DE)
(72) Erfinder: KAHL, Alexander, A-9500 Villach (AT); HAUPTMANN, Jörg, A-9241 Wernberg (AT)
(74) Vertreter: Reinhard - Skuhra - Weise & Partner
(86) Internationale Anmeldenummer: PCT/DE2000/000045
(87) Internationale Veröffentlichungsnummer: WO 2000/042758

(56) Entgegenhaltungen:
- EP-A- 0 099 128
- EP-A- 0 467 367
- US-A- 4 190 745
- US-A- 5 500 894

## Beschreibung

Die Erfindung betrifft eine Schaltungsanordnung zur Signalisierung in Telekommunikationsnetzen nach dem Oberbegriff von Patentanspruch 1, wie aus der US-A-4,190,745 bekannt.

Nebenstellenanlagen (PBX = Private Branch Exchange), digitale Mehrkanalübertragungssysteme (DAML = Digital Added Main Line) oder digitale Übertragungssysteme (DLC = Digital Loop Carrier) weisen Funktionen zur Signalisierung von Betriebszuständen auf. Dazu werden von beispielsweise einer Nebenstellenanlage zwischen die einzelnen Übertragungsleitungen Widerstände geschaltet. Eine Vermittlungsstelle, die mit der Nebenstellenanlage verbunden ist, legt dann zwischen eine Leitung und den übrigen Leitungen, die kurzgeschlossen werden, eine Spannung an und mißt die resultierenden Ströme durch die Leitungen. Aus den gemessenen Strömen kann von der Vermittlungsstelle auf die zwischen die einzelnen Übertragungsleitungen geschalteten Widerstände geschlossen werden. Die Nebenstelle kann beispielsweise durch Änderung der Widerstandswerte der Vermittlungsstelle Informationen über Betriebszustände übermitteln. Es kann dabei beispielsweise signalisiert werden, ob eine Sprach- oder Datenübertragung stattfinden soll. Oder die Vermittlungsstelle kann feststellen, ob die Übertragungsleitungen gestört sind. Dabei müssen jedoch verschiedene Widerstandswerte vorgesehen werden und die Widerstandswerte müssen an länderspezifische Anforderungen der Übertragungsleitungen angepaßt sein, insbesondere wenn Übertragungsleitungen der öffentlichen Telekommunikationsnetze benutzt werden.

Bei drei Übertragungsleitungen erfolgt die Messung, indem mit Schaltern, wofür bevorzugt Relais eingesetzt werden, Widerstände zwischen die Übertragungsleitungen geschaltet werden. Jeweils zwei Übertragungsleitungen werden miteinander kurzgeschlossen, wodurch jeweils zwei Widerstände parallel geschaltet werden. An die verbleibende Übertragungsleitung wird von der Vermittlungsstelle eine Spannung angelegt. Die resultierenden Ströme durch die Übertragungsleitungen und Widerstände werden gemessen und daraus die Widerstandswerte berechnet. Die Berechnungsergebnisse werden auch als Signatur bezeichnet. Von einer Signatur kann beispielsweise auf den Zustand der Übertragungsleitungen oder auf einen bestimmten Betriebszustand geschlossen werden. Ist eine der Übertragungsleitungen unterbrochen, so kann über diese Leitung kein Strom fließen und der von der Vermittlungsstelle bei dieser Messung ermittelte Widerstandswert bzw. die Signatur stimmt nicht mit dem vorgegebenen Widerstandswert bzw. der Signatur für eine unterbrechungsfreie Leitung überein. Nachteilig ist dabei, daß die Relais zum Schalten der Widerstände zwischen die Übertragungsleitungen teuer sind. Für mehrere verschiedene Signaturen müssen dementsprechend viele Widerstände vorgesehen werden. Ferner muß für jede Übertragungsleitung ein Widerstand vorgesehen werden, wobei die Widerstände an die länderspezifischen Anforderungen angepaßt sein müssen. Für verschiedene Widerstandswerte müssen entweder unterschiedliche Schaltungen aufgebaut werden oder parallele Widerstandszweige mit dementsprechend vielen Relais vorgesehen sein.

Aus US 4,710,949 ist eine Schaltungsanordnung zur Feststellung von Störungen einer Teilnehmerleitung bekannt, die spannungsund stromempfindliche Schalter, die in die Leitungen geschaltet sind, aufweist. Nachteilig ist hierbei jedoch, daß diese Schalter sehr aufwendig aufgebaut und damit teuer sind. Ferner können diese Schalter die Übertragung von Signalen beeinflußen.

Der Erfindung liegt daher das technische Problem zugrunde, eine Schaltungsanordnung zur Signalisierung in Telekommunikationsnetzen anzugeben, die einerseits an verschiedene Anforderungen anpaßbar ist und andererseits mit geringen schaltungstechnischen Aufwand aufzubauen ist.

Diese Aufgabe wird durch eine Schaltungsanordnung zur Signalisierung in Telekommunikationsnetzen mit den Merkmalen von Patentanspruch 1 gelöst. Vorteilhafte Ausgestaltungen der Schaltungsanordnung ergeben sich aus den jeweiligen Unteransprüchen.

Eine Schaltungsanordnung zur Signalisierung in Telekommunikationsnetzen weist einen ersten Anschluß und einen zweiten Anschluß für eine erste bzw. zweite Ader einer Ubertragungsleitung auf. Der ersten Anschluß ist mit dem ersten Eingang und der zweite Anschluß dem zweiten Eingang eines Gleichrichters verbunden. Der positive Ausgang und der negative Ausgang des Gleichrichters sind über einen einstellbaren Widerstand miteinander verbunden. Ein dritter Anschluß für eine dritte Ader der Übertragungsleitung ist über die Reihenschaltung eines Schalters und einer ersten Diode mit dem positiven Ausgang des Gleichrichters und über die Reihenschaltung des Schalters und einer zweiten Diode mit dem negativen Ausgang des Gleichrichters verbindbar.

Die Regelschleife, der Gleichrichter und der Transistor und Widerstand wird im normalen Betrieb einer Leitungsschaltung, die beispielsweise eine digitale Teilnehmerschaltung mit einer analogen Übertragungsleitung verknüpft, zur Einstellung einer Leitungsimpedanz benutzt. Vorteilhafterweise wird somit durch die Erfindung mit geringen zusätzlichen Schaltungsaufwand - zwei Dioden und einem Schalter - eine Schaltungsanordnung zur Signalisierung in Telekommunikationsnetzen aufgebaut. Statt zum Testen einer Übertragungsleitung für jede Ader der Übertragungsleitung einen eigenen Widerstand vorzusehen, der im Testfall mit einem Relais zwischen zwei Adern der Übertragungsleitung geschaltet wird, werden bereits vorhandene Schaltungen mit zusätzlichen Schaltungen zum Testen der Übertragungsleitung versehen.

In einer bevorzugten Ausführungsform ist eine Regelschleife, der eine erste Spannung, die am positiven Ausgang des Gleichrichters anliegt, und eine zweite Spannung, die am negativen Ausgang des Gleichrichter anliegt, zugeführt wird, vorgesehen. Die Regelschleife erzeugt eine Steuerspannung, die den einstellbaren Widerstand steuert. Die Übertragungsfunktion der Regelschleife ist einstellbar. Besonders vorteilhaft ist dabei, daß durch die Einstellbarkeit der Übertragungsfunktion der Regelschleife der einstellbare Widerstand und damit der Widerstand zwischen zwei Adern der Übertragungsleitung beim Testen einstellbar ist. Damit ist die Schaltungsanordnung ohne Änderung der Schaltungtechnik an länderspezifische Anforderungen anpaßbar und es können verschiedene Signaturen erzeugt werden.

Besonders bevorzugt weist der einstellbare Widerstand einen Transistor auf.

Die Kathode der ersten Diode ist bevorzugt mit dem positiven Ausgang des Gleichrichters und die Anode der zweiten Diode bevorzugt mit dem negativen Ausgang des Gleichrichters verbunden.

Bevorzugt weist die Regelschleife ein digitales Filter auf, wobei die Übertragungsfunktion der Regelschleife durch Programmierung der Filterkoeffizienten des digitalen Filters einstellbar ist. Besonders bevorzugt ist dabei das digitale Filter durch einen entsprechend programmierten digitalen Signalprozessor gebildet.

Die Regelschleife weist in einer bevorzugten Ausführungsform eine dem Transistor vorgeschaltete analoge Integratorschaltung auf, die die Differenz aus einer ersten und einer zweiten Eingangsspannung integriert und deren Ausgangssignal den Transistor steuert.

Besonders bevorzugt ist der Transistor als ein n-Kanal-MOSFET ausgeführt.

Die Schaltungsanordnung zur Signalisierung in Telekommunikationsnetzen eignet sich durch die Verwendung von elektronischen Bauelementen auch zum Aufbau auf einer integrierten Schaltung. Dabei können selbstverständlich alle weiteren Schaltungen wie die Regelschleife, der Gleichrichter und der Transistor und Widerstand mitintegriert werden.

Weitere Vorteile, Merkmale und Anwendungsmöglichkeiten der Erfindung ergeben sich aus der nachfolgenden Beschreibung von Ausführungsbeispielen in Verbindung mit der Zeichnung. In der Zeichnung zeigt
- Fig.1: ein Ausführungsbeispiel Schaltungsanordnung zur Signalisierung in Telekommunikationsnetzen, und
- Fig.2: drei verschiedene Betriebszustände der Schaltungsanordnung zum Feststellen von Leitungsunterbrechungen.

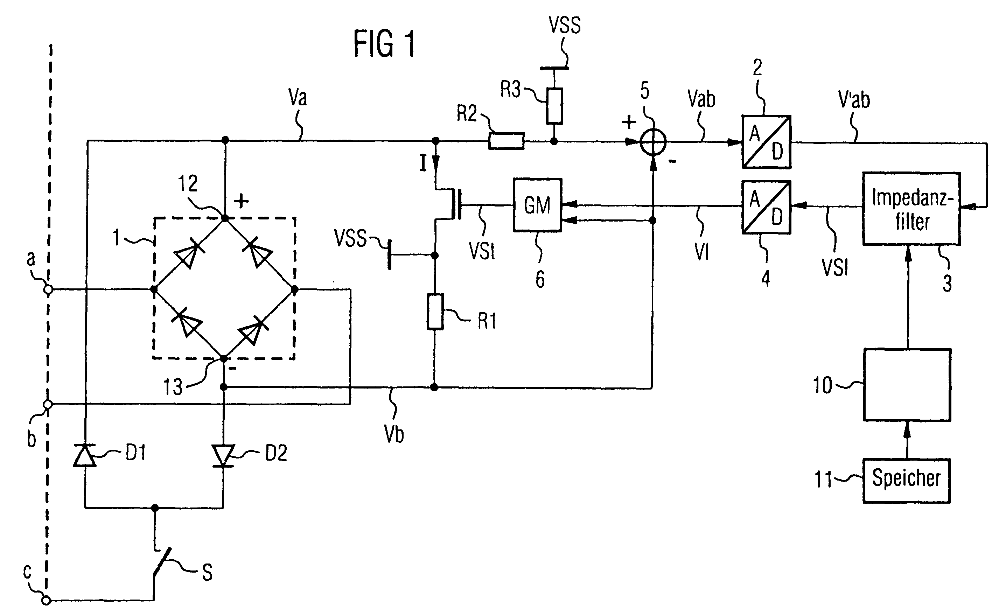

Die in Fig.1 dargestellte Schaltungsanordnung zur Signalisierung in Telekommunikationsnetzen weist drei Anschlüsse a, b und c auf, die mit einer dreiadrigen Übertragungsleitung verbindbar sind. Die Übertragungsleitung kann beispielsweise aus einer zweiadrigen a/b-Ader zur Übertragung von Signalen und einer Erdungsleitung c bestehen.

Die Schaltungsanordnung zur Signalisierung findet bei einem Chipsatz zum Anschließen einer digitalen Teilnehmerschaltung (DSL = Digital Subscriber Line) an eine analoge Telefonleitung (Übertragungsleitung) Anwendung. Der Chipsatz wandelt dabei die Signale auf der analogen Telefonleitung in digitale Signale zur Weiterverarbeitung mit der digitalen Teilnehmerschaltung und umgekehrt digitale Signale in analoge Signale der digitalen Teilnehmerschaltung zur Übertragung über die analoge Telefonleitung.

Über die Übertragungsleitung können von einer Vermittlungstelle verschiedene Spannungen zur Signalisierung angelegt werden. Dazu werden von der Vermittlungstelle zwei der drei Adern der Übertragungsleitung kurzgeschlossen. Weiterhin schaltet die Schaltungsanordnung zur Signalisierung zwischen die verbleibende Ader und die zwei kurzgeschlossenen Adern einen Widerstand. Von seiten der Vermittlungsstelle wird zwischen die verbleibende Ader und die zwei kurzgeschlossenen Adern eine Spannung angelegt. Ein über die Adern fließender Strom wird von der Vermittlungsstelle gemessen und daraus ein Widerstand berechnet. Der berechnete Widerstand liegt bei fehlerfreien Leitungen in einem bestimmten vorgegebenen Bereich. Dabei ist der vorgegebene Bereich durch länderspezifische Anforderungen bestimmt.

Die Anschlüsse a und b der Schaltungsanordnung zur Signalisierung sind mit einem ersten bzw. einem zweiten Eingang eines Brückengleichrichters 1 verbunden. Ein erster 12 und zweiter 13 Ausgang des Brückengleichrichters sind über eine erste Diode D1 und einen Schalter S bzw. eine zweite Diode D2 und den Schalter S mit dem dritten Anschluß c der Schaltungsanordnung zur Signalisierung verbindbar. Der n-Anschluß der ersten Diode D1 ist dabei mit dem ersten Ausgang 12 des Gleichrichters 1 verbunden. Der p-Anschluß der zweiten Diode D2 ist mit dem zweiten Ausgang 13 des Gleichrichters 1 verbunden.

Der erste Ausgang 12 des Brückengleichrichters 1 ist über die Laststrecke eines Transistors T1 mit einem Bezugspotential VSS verbunden. Der zweite Ausgang 13 des Brückengleichrichters 1 ist über einen Widerstand R1 mit dem Bezugspotential VSS verbunden.

Eine zwischen den Anschlüssen a und b anliegende Spannung wird durch den Brückengleichrichter 1 gleichgerichtet. Am ersten Ausgang 12 des Brückengleichrichters 1 liegt eine gleichgerichtete positive Spannung Va an. Am zweiten Ausgang 13 des Brükkengleichrichters 1 liegt eine gleichgerichtete negative Spannung Vb an.

Die gleichgerichtete positive Spannung Va, die hohe Spannungswerte aufweist, wird über einen Spannungsteiler R2 und R3 auf eine kleinere Spannung geteilt, um eine Übersteuerung der nachfolgenden Schaltungen, in denen Signale im Verhältnis zur gleichgerichteten positiven Spannung nur niedrige Spannungspegel aufweisen, zu vermeiden.

Die spannungsgeteilte positive Spannung Va und die negative Spannung Vb werden einer Subtrahiererschaltung 5 zugeführt, an derren Ausgang eine Differenzspannung Vab anliegt.

Die Differenzspannung Vab wird anschließend von einem Analog-Digital-Umsetzer 2 mit einer Abtastrate fs abgetastet und in ein digitales Signal V'ab gewandelt.

Das digitale Ausgangssignal V'ab des Analog-Digital-Umsetzers 2 wird einem digitalen Filters 3 zugeführt. Das digitale Filter 3 ist zur Anpassung an länderspezifische Anforderungen über eine digitale Steuereinrichtung 10 programmierbar und weist dazu eine programmierbare Übertragungsfunktion k auf. Dabei kann das digitale Filter 4 als digitales Hardwarefilter ausgeführt sein, bei dem die Koeffizienten programmierbar sind. Ebenso kann das digitale Filter als Signalverarbeitungsalgorithmus auf einem digitalen Signalprozessor ausgeführt sein, wobei durch Variablen die Filterfunktion einstellbar ist.

Das Ausgangssignal VSI des digitalen Filters 4 wird von einem Digital-Analog-Umsetzer 4 in ein analoges Signal VI gewandelt.

Das analoge Signal VI wird einem ersten Eingang einer analogen Integratorschaltung 6 zugeführt. Über einen zweiten Eingang wird der analogen Integratorschaltung 6 die negative Spannung Vb zugeführt. Aus beiden Eingangssignalen wird in der analogen Integratorschaltung 6 eine Differenz gebildet, die anschließend integriert wird. Am Ausgang der analogen Integratorschaltung 6 liegt die Spannung VSt an, die an den Steueranschluß der Transistors T1 geführt wird. Über den Transistor T1 wird ein Leitungsstrom I eingestellt. Die analoge Integratorschaltung 6 integriert die Differenzspannung VI - Vb so lange, bis die Differenzspannung VI - Vb = 0 wird. Daraus läßt sich mit Vb = R1*I = VI ein Leitwert GM = I/VI = 1/R1 der analogen Integratorschaltung 6 ableiten.

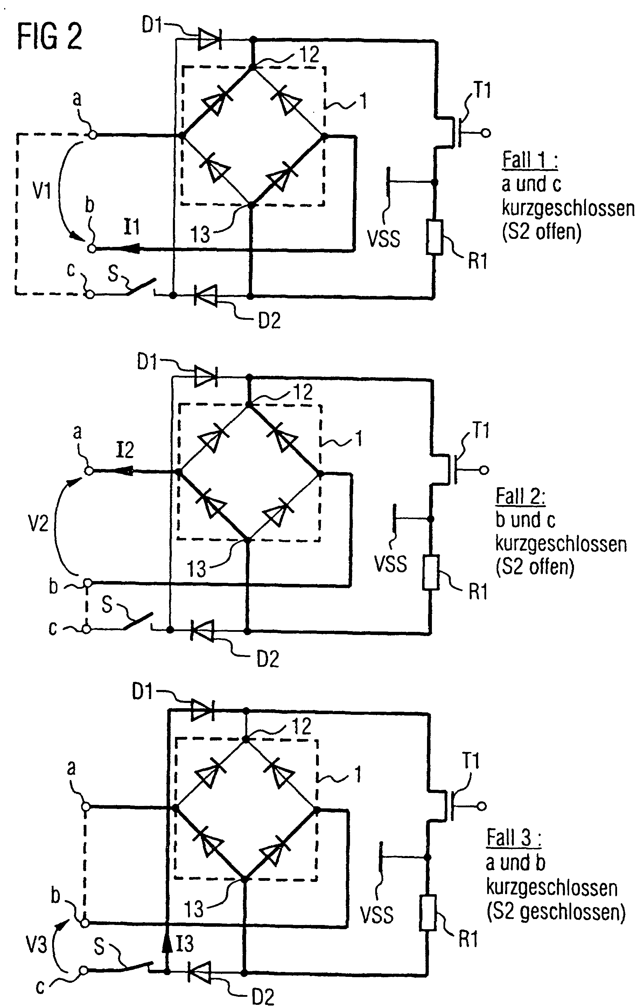

In Figur 2 sind drei verschiedene Fälle zum Testen der Übertragungsleitung dargestellt. Für jeden Fall werden jeweils zwei Adern der Übertragunsleitung entsprechend zwei dargestellten Anschlüssen, die durch eine gestrichelte Linie als miteinander verbunden gekennzeichnet sind, kurzgeschlossen. Zwischen die kurzgeschlossenen Anschlüsse und der verbleibenden Ader bzw. dem verbleibenden Anschluß wird von seiten der Vermittlungsstelle eine Spannung angelegt.
Fall 1: Die Anschlüsse a und c werden kurzgeschlossen. Zwischen den Anschluß b und die kurzgeschlossenen Anschlüsse a und c wird eine erste Spannung V1 angelegt. Der Schalter S ist geöffnet. Über den fett gekennzeichneten Pfad fließt ein erster Strom I1. Aus der ersten Spannung V1 und den ersten Strom I1 kann ein Widerstand V1/I1 berechnet werden, der durch den Widerstand der Laststrecke des ersten Transistors T1 und des Widerstands R1 bestimmt wird.
Fall 2: Die Anschlüsse b und c werden kurzgeschlossen. Zwischen den Anschluß a und die kurzgeschlossenen Anschlüsse b und c wird eine zweite Spannung V2 angelegt. Der Schalter S ist geöffnet. Über den fett gekennzeichneten Pfad fließt ein zweiter Strom I2. Aus der zweiten Spannung V2 und den zweiten Strom I2 kann wiederum ein Widerstand V2/I2 berechnet werden, der durch den Widerstand der Laststrecke des ersten Transistors T1 und des Widerstands R1 bestimmt wird.
Fall 3: Die Anschlüsse a und b werden kurzgeschlossen. Zwischen den Anschluß c und die kurzgeschlossenen Anschlüsse a und b wird eine dritte Spannung V3 angelegt. Der Schalter S ist bei diesem Fall geschlossen. Über den fett gekennzeichneten Pfad fließt ein dritter Strom I3. Aus der dritten Spannung V3 und den dritten Strom I3 kann wiederum ein Widerstand V3/I3 berechnet werden, der durch den Widerstand der Laststrecke des ersten Transistors T1 und des Widerstands R1 bestimmt wird.

Für jeden der drei Fälle wird eine Ader der Übertragungsleitung getestet. Weicht in einem der drei Fälle der berechnete Widerstand von einem vorgegebenen Wert ab, so liegt eine fehlerhafte Übertragungsleitung vor. Da der berechnete Widerstandswert von dem Widerstand der Laststrecke des ersten Transistors T1 und dem Widerstands R1 abhängt, kann durch Programmierung der Übertragungsfunktion des digitalen Filters 3 der Widerstand der Laststrecke des Transistors T1 an (beispielsweise) länderspezifische Anforderungen angepaßt werden. Dazu können in einem Speicher 11 länderspezifische Werte für den vorgegebenen Widerstand abgelegt sein. Die digitale Steuereinrichtung 10 liest dazu aus dem Speicher 11 die zur Programmierung eines landesspezifischen Widerstandes erforderlichen Werte aus dem Speicher 11 und programmiert das digitale Filter 3 dementsprechend um.

## Patentansprüche

1. Schaltungsanordnung zur Signalisierung in Telekommunikationsnetzen, wobei ein erster Anschluß (a) und ein zweiter Anschluß (b) für eine erste bzw. zweite Ader einer Übertragungsleitung mit dem ersten Eingang bzw. dem zweiten Eingang eines Gleichrichters (1) verbunden sind, wobei der positive Ausgang (12) und der negative Ausgang (13) des Gleichrichters (1) über einen einstellbaren Widerstand (T1, R1) miteinander verbunden sind,
**dadurch gekennzeichnet, daß** ein dritter Anschluß (c) für eine dritte Ader der Übertragungsleitung über die Reihenschaltung eines Schalters (S) und einer ersten Diode (D1) mit dem positiven Ausgang (12) des Gleichrichters (1) und über die Reihenschaltung des Schalters (S) und einer zweiten Diode (D2) mit dem negativen Ausgang (13) des Gleichrichters (1) verbindbar ist.

2. Schaltungsanordnung nach Anspruch 1,
**dadurch gekennzeichnet, daß**
eine Regelschleife (2 bis 6), der eine erste Spannung (Va), die am positiven Ausgang (12) des Gleichrichters (1) anliegt, und eine zweite Spannung (Vb), die am negativen Ausgang (13) des Gleichrichter (1) anliegt, zugeführt wird, vorgesehen ist und die Regelschleife (2 bis 6) eine Steuerspannung (VSt) erzeugt, die den einstellbaren Widerstand (T1, R1) steuert, und wobei die Übertragungsfunktion der Regelschleife (2 bis 6) einstellbar ist.

3. Schaltungsanordnung nach Anspruch 1 oder 2,
**dadurch gekennzeichnet, daß**
der einstellbare Widerstand einen Transistor (T1) aufweist.

4. Schaltungsanordnung nach einem der vorhergehenden Ansprüche,
**dadurch gekennzeichnet, daß**
die Kathode der ersten Diode (D1) mit dem positiven Ausgang (12) des Gleichrichters (1) und die Anode der zweiten Diode (D2) mit dem negativen Ausgang (13) des Gleichrichters (1) verbunden ist.

5. Schaltungsanordnung nach Anspruch 2, 3 oder 4,
**dadurch gekennzeichnet, daß**
die Regelschleife (2 - 6) ein digitales Filter (3) aufweist, wobei die Übertragungsfunktion der Regelschleife durch Programmierung der Filterkoeffizienten des digitalen Filters einstellbar ist.

6. Schaltungsanordnung nach Anspruch 5,
**dadurch gekennzeichnet, daß**
das digitale Filter (3) durch einen entsprechend programmierten digitalen Signalprozessor gebildet ist.

7. Schaltungsanordnung nach Anspruch 3,
**dadurch gekennzeichnet, daß**
die Regelschleife (2 - 6) eine dem Transistor (T1) vorgeschaltete analoge Integratorschaltung (6) aufweist, die die Differenz aus einer ersten (VI) und einer zweiten (Vb) Eingangsspannung integriert und deren Ausgangssignal (VSt) den Transistor (T1) steuert.

8. Schaltungsanordnung nach Anspruch 3 oder 7,
**dadurch gekennzeichnet, daß**
der Transistor (T1) als ein n-Kanal-MOSFET ausgeführt ist.

## Claims

1. A circuit arrangement for signaling in telecommunications networks, with a first connection (a) and a second connection (b) for a first and a second conductor, respectively, in a transmission line being connected to the first input and to the second input, respectively, of a rectifier (1), and with the positive output (12) and the negative output (13) of the rectifier (1) being connected to one another via a variable resistor (T1, R1), **characterised in that**
a third connection (c) for a third conductor of the transmission line is connectable via the series circuit formed by a switch (S) and a first diode (D1) to the positive output (12) of the rectifier (1), and via the series circuit formed by the switch (S) and a second diode (D2) to the negative output (13) of the rectifier (1).

2. The circuit arrangement as claimed in claim 1,
wherein
a control loop (2 to 6) is provided to which a first voltage (Va), which is produced at the positive output (12) of the rectifier (1), and a second voltage (Vb), which is produced at the negative output (13) of the rectifier (1), are supplied, and the control loop (2 to 6) produces a control voltage (VSt) which controls the variable resistor (T1, R1) and with the transfer function of the control loop (2 to 6) being variable.

3. The circuit arrangement as claimed in claim 1 or 2,
wherein
the variable resistor has a transistor (T1).

4. The circuit arrangement as claimed in one of the preceding claims,
wherein
the cathode of the first diode (D1) is connected to the positive output (12) of the rectifier (1), and the anode of the second diode (D2) is connected to the negative output (13) of the rectifier (1).

5. The circuit arrangement as claimed in claim 2, 3 or 4,
wherein
the control loop (2-6) has a digital filter (3), with the transfer function of the control loop being variable by programming the filter coefficients of the digital filter.

6. The circuit arrangement as claimed in claim 5,
wherein
the digital filter (3) is formed by an appropriately programmed digital signal processor.

7. The circuit arrangement as claimed in claim 3,
wherein
the control loop (2-6) has an analog integrator circuit (6) which is connected upstream of the transistor (T1) and integrates the difference between a first (VI) and a second (Vb) input voltage, and whose output signal (VSt) controls the transistor (T1).

8. The circuit arrangement as claimed in claim 3 or 7,
wherein
the transistor (T1) is an n-channel MOSFET.

## Revendications

1. Circuit destiné à la signalisation dans des réseaux de télécommunication, dans lequel une première borne (a) et une deuxième borne (b), respectivement pour un premier conducteur et un deuxième conducteur d'une ligne de transmission, sont reliées, respectivement, à la première entrée et à la deuxième entrée d'un redresseur (1), tandis que la sortie positive (12) et la sortie négative (13) du redresseur (1) sont reliées l'une à l'autre, par l'intermédiaire d'une résistance réglable (T1, R1),
**caractérisé en ce qu'**une troisième borne (c) pour un troisième conducteur de la ligne de transmission peut être reliée à la sortie positive (12) du redresseur (1) par l'intermédiaire du montage série d'un commutateur (S) et d'une première diode (D1), et à la sortie négative (13) du redresseur (1) par l'intermédiaire du montage série du commutateur (S) et d'une deuxième diode (D2).

2. Circuit selon la revendication 1,
**caractérisé en ce qu'**il est prévu une boucle de régulation (2 à 6), à laquelle est amenée une première tension (Va), qui est présente sur la sortie positive (12) du redresseur (1), et une deuxième tension (Vb), qui est présente à la sortie négative (13) du redresseur (1), et **en ce que** la boucle de régulation (2 à 6) produit une tension de commande (VSt), qui commande la résistance réglable (T1, R1), la fonction de transmission de la boucle de régulation (2 à 6) étant donc réglable.

3. Circuit selon la revendication 1 ou 2,
**caractérisé en ce que** la résistance réglable présente un transistor (T1).

4. Circuit selon l'une des revendications précédentes,
**caractérisé en ce que** la cathode de la première diode (D1) est reliée à la sortie positive (12) du redresseur (1), et l'anode de la deuxième diode (D2) est reliée à la sortie négative (13) du redresseur (1).

5. Circuit selon la revendication 2, 3 ou 4,
**caractérisé en ce que** la boucle de régulation (2 à 6) présente un filtre numérique (3) , si bien que la fonction de transmission de la boucle de régulation peut être réglée par programmation des coefficients de filtrage du filtre numérique.

6. Circuit selon la revendication 5,
**caractérisé en ce que** le filtre numérique (3) est constitué par un processeur numérique de signaux, programmé en conséquence.

7. Circuit selon la revendication 3,
**caractérisé en ce que** la boucle de régulation (2 à 6) présente un circuit intégrateur analogique (6), monté en amont du transistor (T1), et qui intègre la différence entre une première tension d'entrée (VI) et une deuxième tension d'entrée (Vb), et dont le signal de sortie (VSt) commande le transistor (T1).

8. Circuit selon la revendication 3 ou 7,
**caractérisé en ce que** le transistor (T1) est réalisé en tant que MOSFET à canal N.
